# FASCICULE DE BREVET EUROPEEN

(11) **EP 0 629 940 B1**
(45) Date de publication et mention de la délivrance du brevet: **17.10.2001**
(21) Numéro de dépôt: 94401285.5
(22) Date de dépôt: 08.06.1994
(51) Int. Cl.: G06F 1/00

(54) **Dispositif de détection d'intrusions et d'usagers suspects pour ensemble informatique et système de sécurité comportant un tel dispositif**
Einrichtung zur Entdeckung des Eindringens und verdächtiger Benutzer für eine Datenverarbeitungseinheit und Sicherheitssystem mit dieser Einrichtung
Device for detecting intrusion and suspicious users for a data processing unit and security system including this device

(30) Priorité: 09.06.1993 FR 9306935
(43) Date de publication de la demande: 21.12.1994
(73) Titulaire: ALCATEL, 75008 Paris (FR)
(72) Inventeur: Lermuzeaux, Jean-Marc, F-91240 St. Michel sur Orge (FR); Emery, Thierry, F-91180 St. Germain les Arpajon (FR); Gonthier, Patrice, F-92160 Antony (FR)
(74) Mandataire: Schaub, Bernard

(56) Documents cités:
- EP-A- 0 329 415
- DIGEST OF PAPERS COMPCON SPRING 91, 25 FEVRIER - 1 MARS 1991, SAN FRANCISCO US, IEEE, NEW YORK US pages 170 - 176 S. R. SNAPP ET AL. 'A system for distributed intrusion detection'
- PROCEEDINGS 1988 IEEE SYMPOSIUM ON SECURITY AND PRIVACY, 18 - 21 AVRIL 1988, OAKLAND US, IEEE, NEW YORK US pages 59 - 66 T. F. LUNT ET AL. 'A prototype real-time intrusion-detection expert system'

## Description

L'invention concerne un dispositif de détection d'intrusions et d'usagers suspects et un système de sécurité, pour ensemble informatique, comportant un tel dispositif.

Le système de sécurité est destiné à protéger un ensemble informatique, auquel il est associé, contre les actions informatiques anormales des usagers ou d'utilisateurs intrus, lorsque ces actions sont susceptibles de porter directement ou indirectement atteinte à la confidentialité, à l'intégrité et/ou à la disponibilité des informations et des services de l'ensemble informatique.

Le dispositif est destiné à assurer une détection des intrusions que sont considérées constituer lesdites actions informatiques anormales des usagers et a fortiori celles de tiers intrus, et corollairement une détection des personnes impliquées dans ces intrusions ou suspectes de l'être, ceci dans le cadre d'un système de sécurité tel qu'évoqué ci-dessus.

De nombreux ensembles informatiques actuels, qu'ils soient dotés d'unités de traitement centralisées, ou qu'ils soient organisés en réseaux reliant des unités de traitement géographiquement réparties, disposent de différents points d'accès pour la desserte de leurs usagers. Le nombre de ces points et la facilité avec laquelle ils sont souvent accessibles, qui sont nécessaires à l'exploitation de ces ensembles informatiques, ont pour inconvénient de faciliter les tentatives d'intrusion par des personnes qui ne font pas partie des usagers admis et les tentatives par des utilisateurs, agissant isolément ou de manière concertée, pour réaliser des opérations informatiques que, licitement, ce ou ces utilisateurs ne devraient pas pouvoir effectuer.

Il est connu de chercher à détecter les intrusions dans un ensemble informatique et à identifier les usagers auteurs d'actions illicites par une approche statistique ou neuronale. A cet effet, on compare algorithmiquement chaque donnée courante de surveillance, qui correspond à une action informatique d'un sujet sur un objet, à un comportement habituel d'usager, soit représenté par un profil statistique préalablement déterminé, soit mémorisé dans un réseau neuronal.

Ceci n'est pas pleinement satisfaisant, dans la mesure où les notions de comportement inhabituel et intrusif ne se recoupent pas, de plus il est possible qu'un comportement intrusif puisse être mémorisé à tort en tant que comportement normal admissible.

Il est aussi connu d'utiliser un système expert, voir, par exemple, document "Digest of Papers Compcon Spring 91", 25 Février - 1 Mars 1991, San Francisco US, IEEE, New York US, pages 170-176; S.R. SNAPP et al. "A system for distributed intrusion detection" notamment en liaison avec la méthode précédente, pour chercher à déterminer les intrusions en appliquant aux données de surveillance, fournies par un système de sécurité d'ensemble informatique, les connaissances relatives aux scénarios potentiels d'attaque de l'ensemble informatique. Ceci n'est pas non plus pleinement satisfaisant, car seules sont détectées, par cette méthode, les intrusions qui correspondent à des scénarios d'attaque préalablement mémorisés.

Dans la mesure où, dans chacune des approches succinctement évoquées ci-dessus, le comportement envisagé est limité à des actions élémentaires au niveau du système d'exploitation, par exemple la lecture d'un fichier, il n'est pas possible de prendre en compte les opérations inadmissibles résultant d'une activité complexe, notamment celles qui interviennent au niveau d'une application. Il n'est alors pas possible de tirer des conclusions justifiées à partir des informations obtenues sur l'état d'intrusion pour un ensemble informatique surveillé et sur la participation potentielle ou réelle des usagers à des opérations répréhensibles.

L'invention propose donc un dispositif de détection d'intrusions et éventuellement d'usagers suspects, pour ensemble informatique, exploitant des flots de données de surveillance, relatives au fonctionnement de l'ensemble informatique et notamment aux actions des utilisateurs sur cet ensemble, qui sont établies au niveau de ce dernier.

Selon une caractéristique de l'invention, ce dispositif de détection comporte:
- des premiers moyens pour modéliser, par exploitation de règles et de connaissances préalablement acquises, la cible que constitue cet ensemble informatique et ses usagers ainsi que leurs comportements respectifs par une représentation symbolique à l'aide d'un réseau sémantique;
- des seconds moyens pour comparer le comportement modélisé du système et de ses utilisateurs par rapport au comportement normal modélisé prévu pour les mêmes conditions par des règles de comportement et de sécurité contenues dans une base de connaissances propre à ces seconds moyens et pour en inférer soit un objet anomalie, en cas de violation d'au moins une règle de comportement, soit un objet intrusion ou hypothèse d'intrusion, en cas de violation d'au moins une règle de sécurité;
- des troisièmes moyens pour interpréter les anomalies constatées par exploitation de règles et de connaissances préalablement acquises, afin d'émettre, renforcer ou confirmer des hypothèses d'intrusion en correspondance;
- des quatrièmes moyens pour corréler et interpréter les hypothèses d'intrusion et les intrusions constatées par exploitation des règles et des connaissances préalablement acquises afin de relier les diverses hypothèses d'intrusion et/ou intrusions, d'en inférer de nouvelles;
- des moyens de communication coopérant avec les divers autres moyens évoqués ci-dessus pour assurer une signalisation des diverses informations que ces divers moyens produisent relativement aux anomalies, aux hypothèses d'intrusion et aux intrusions.

Selon une caractéristique complémentaire, le dispositif de détection selon l'invention est susceptible de comporter des cinquièmes moyens pour identifier à l'aide de connaissances préalablement acquises les usagers réellement responsables des anomalies, hypothèses d'intrusion et intrusions établies par les seconds, troisièmes et/ou quatrièmes moyens, pour évaluer leur degré de suspicion et pour signaler ces usagers responsables, en coopération avec ces moyens et par l'intermédiaire des moyens de communication.

L'invention, ses caractéristiques et ses avantages sont précisés dans la description qui suit en liaison avec les figures évoquées ci-dessous.

La figure 1 présente une architecture logicielle de dispositif de détection d'intrusions selon l'invention.

La figure 2 présente un système de sécurité selon l'invention en liaison avec une machine d'ensemble informatique auquel ce système est associé.

La figure 3 présente un schéma montrant les liaisons entre un moniteur local de système de sécurité, une machine informatique qu'il dessert et un moniteur global dont il dépend.

La figure 4 présente un abstracteur-investigateur pour dispositif de détection selon l'invention.

La figure 5 présente un schéma d'un analyseur-contrôleur pour système de sécurité selon l'invention.

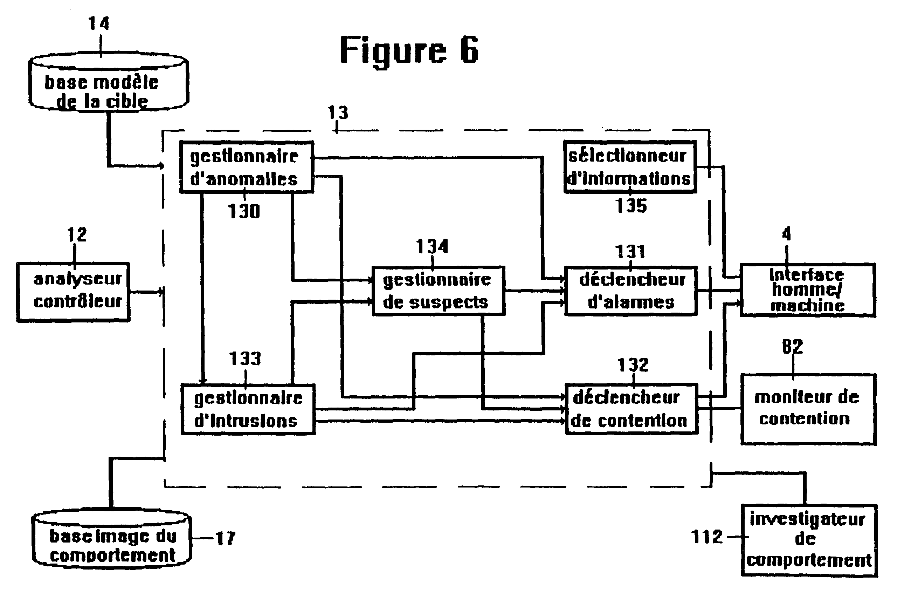

La figure 6 présente un schéma d'un gestionnaire de suspicion et de réaction pour système de sécurité selon l'invention.

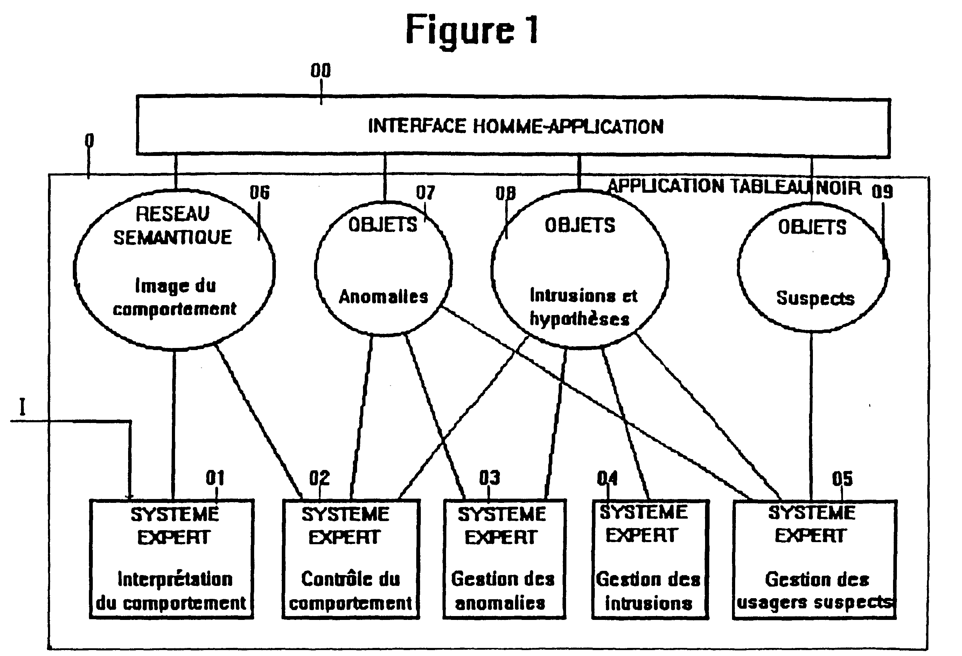

Le dispositif de détection d'intrusions selon l'invention dont l'architecture logicielle est présentée en figure 1 est plus particulièrement destiné à être associé à un ensemble informatique dans le cadre d'un système de sécurité destiné à protéger cet ensemble informatique des intrusions des usagers et/ou d'utilisateurs intrus, ce dispositif étant destiné à détecter tant les intrusions et tentatives d'intrusions que les usagers susceptibles d'être impliqués dans ces intrusions et tentatives d'intrusion.

L'architecture logicielle proposée ici prévoit la mise en oeuvre de cinq systèmes experts, référencés de 01 à 05, qui coopèrent grâce à une application de type tableau noir, référencée 0, et d'une interface homme-application 00 pour au moins une personne ayant la responsabilité de la sécurité de l'ensemble informatique et du fonctionnement du dispositif de détection d'intrusions.

Selon l'invention, pour prendre en compte une politique pour l'ensemble informatique qui, dans la réalisation considérée, concerne la sécurité de cet ensemble, se définit en termes d'actions permises ou non aux usagers et s'étend donc au-delà de la notion d'intrusion telle que définie plus haut, il est prévu de prendre en compte, au niveau du dispositif de détection, des règles de comportement dont le non-respect constitue une anomalie, en plus des règles de sécurité dont le non-respect constitue de fait une intrusion caractérisée.

Le non-respect des règles se traduit donc en anomalies et en intrusions, étant entendu qu'une anomalie est susceptible d'être ultérieurement interprétée pour inférer une intrusion par le dispositif, suite au fonctionnement de ce dernier.

Le dispositif de détection est chargé de vérifier si les flots de données de surveillance successivement reçus, ici sous forme d'enregistrements d'audit, en provenance de l'ensemble informatique qu'il dessert, permettent de considérer que cet ensemble fonctionne normalement comme prévu. A cet effet, le système expert 01 reçoit, à un niveau d'entrée référencé I, les enregistrements d'audit provenant de l'ensemble informatique et il les interprète pour en extraire une représentation symbolique de l'état de cet ensemble informatique, de son comportement et de celui de ses utilisateurs sous la forme d'un réseau sémantique, référencé 06 et à différents niveaux d'abstraction en particulier au niveau action, activité, etc.; un tel réseau étant constitué comme il est connu par un ensemble d'objets servant à la modélisation qui sont liés entre eux par des relations à cet effet.

Le système expert 02 assure le contrôle du comportement de l'ensemble informatique 2 et de ses utilisateurs de manière à déterminer si ce comportement est en accord avec les règles de comportement et de sécurité alors établies.

A partir de l'ensemble de connaissances que représente ces règles il détermine si l'évolution de comportement traduite par un flot de données en cours d'examen correspond à un comportement normal reconnu ou non. Dans ce dernier cas il élabore un objet de type intrusion, s'il y a eu non-respect de règles contraignantes de sécurité ou un objet de type anomalie en cas de comportement considéré comme anormal, c'est à dire en cas de comportement qui ne respecte pas les règles de comportement, sans toutefois violer les règles contraignantes évoquées ci-dessus.

Une intrusion est ici considérée comme une faute caractérisée qui correspond par exemple à un vol de données ou à un accès par un utilisateur non autorisé dans l'ensemble informatique, une anomalie est considérée comme un indice de faute, c'est par exemple une impression par un usager d'un volume de données supérieur au volume qui lui est alloué.

Le dispositif de détection selon l'invention est aussi chargé d'assurer une gestion des anomalies pour émettre, renforcer ou confirmer des hypothèses d'intrusion et une gestion des intrusions pour d'une part permettre la prise de mesures de contention, qui sont des mesures de sécurité visant à contrecarrer les intrusions pour protéger l'ensemble informatique, et d'autre part tenter d'identifier les usagers susceptibles d'être impliqués dans une tentative simple ou complexe d'intrusion.

A cet effet, le système expert 03 est chargé d'interpréter les nouvelles anomalies à partir des objets, de type anomalie, incorporés dans un ensemble d'objets, ici référencé 07, et reliés au réseau sémantique 06. Il exploite une base de connaissances, propre pour l'interprétation des anomalies et il pose des hypothèses d'intrusion en cas d'incertitude d'interprétation. Des objets de type hypothèse d'intrusion sont produits dans ces conditions, afin d'être incorporés avec les objets de type intrusion dans un ensemble d'objets, ici référencé 08, ces objets étant reliés au réseau sémantique 06.

Le processus de raisonnement de ce système expert 03 prend en compte des règles établies, qui ne sont pas considérées comme totalement contraignantes, afin de déterminer si la ou les violation(s) constatée(s) d'une ou de plusieurs règles, traduites par la présence d'une anomalie ou de plusieurs, sont susceptibles ou non d'être acceptées par l'ensemble informatique sans danger. Des objets de type hypothèse d'intrusion simple, renforcée ou confirmée sont produits suivant les conditions et les risques. Une hypothèse d'intrusion confirmée est considérée comme une intrusion à part entière.

Si plusieurs anomalies conduisent vers une même hypothèse cette dernière est renforcée et il est prévu de lui affecter un coefficient de certitude de plus en plus élevé au niveau de l'objet qui la représente, le dépassement d'un seuil élevé donné de niveau de certitude conduisant ici à la confirmation d'une hypothèse d'intrusion, dès lors prise en compte en tant qu'intrusion caractérisée.

Le système expert 04 est chargé de corréler et interpréter les intrusions, à partir des objets de type intrusion et hypothèses d'intrusion incorporés dans l'ensemble d'objets référencé 08, afin de produire de nouveaux objets, de type intrusion ou hypothèse d'intrusion, et de relier des objets de l'ensemble 08 entre eux. Il est ainsi chargé de la prise en compte des intrusions complexes, par exemple celles qui relèvent d'attaques conjuguées impliquant une collusion entre des usagers, ou celles qui interviennent en cascade et ont en conséquence des liens logiques ou temporels les unissant.

Il est donc apte à produire des objets de type intrusion ou hypothèse d'intrusion du type déjà évoqué plus haut et à préciser leurs liens.

Le système expert 05 est chargé de la gestion des usagers suspects en vue de déterminer à partir des objets de type anomalie, intrusion et hypothèse d'intrusion, ceux des usagers qui en sont réellement responsables et qui sont donc suspects d'intrusion et en vue de leur attribuer en conséquence un coefficient caractéristique correspondant, ici appelé degré de suspicion. Il définit en conséquence des objets de type suspect par raisonnement à partir des objets évoqués ci-dessus qu'il prend en compte et il emplit un ensemble d'objets correspondant ici référencé 09, ces objets étant reliés au réseau sémantique 06.

Dans la réalisation envisagée, les systèmes experts 01 à 05 partagent un même moteur d'inférences, fonctionnant en chaînage avant, qui est exploité en liaison avec autant de bases de connaissances qu'il y a de systèmes experts.

Les systèmes experts 01 à 05 sont ici basés sur des règles de production d'ordre un, c'est-à-dire comportant des variables, comme il est connu. Ces systèmes sont régis par l'application 0, de type tableau noir, qui permet à chacun de communiquer aux autres les faits qu'il a obtenus par raisonnement et qu'il a classés afin de permettre à chacun de les exploiter. A chaque événement constitué soit par l'arrivée d'un flot de données de surveillance, sous la forme d'un enregistrement d'audit, soit par l'écriture d'un objet, l'application 0 est chargée d'assurer en fonction des règles qui la régissent alors le déclenchement, pour un cycle de travail, d'un système expert éventuellement choisi par elle parmi plusieurs, si plus d'un entre eux est susceptible de prendre en compte cet événement, comme cela est connu. Ainsi, en cas d'arrivée d'un enregistrement d'audit, la priorité est normalement donnée au système expert 01 chargé d'interpréter le comportement de l'ensemble informatique surveillé, alors qu'en cas d'écriture d'un objet, de type intrusion, priorité est donnée au système expert 05 chargé de la gestion des usagers suspects dans la mesure où leur signalisation ainsi que celle des intrusions à la personne ayant la responsabilité de la sécurité du système informatique est un objectif prioritaire du dispositif selon l'invention.

L'information de ce(s) responsable(s) s'effectue par l'intermédiaire de l'interface homme-application 00 qui donne accès aux connaissances emmagasinées dans des bases de données et de faits qui seront évoquées plus loin; cette information traduite par l'interface sous une forme humainement exploitable est destinée à permettre une mise en oeuvre de mesures de contention au niveau de l'ensemble informatique, à partir de l'analyse de la situation telle que traduite par le dispositif de détection et avec l'assistance de ce dispositif dans le choix des mesures à prendre, si besoin est. La signalisation des anomalies, des hypothèses d'intrusion, des intrusions, des usagers et des suspicions au responsable de sécurité est essentielle et un accès aux informations mémorisées au niveau du réseau sémantique 06 et des ensembles d'objets 07 à 09 est donné pour permettre de connaître et comprendre le(s) comportement(s) susceptible(s) d'avoir conduit aux faits signalés.

Comme indiqué plus haut, le dispositif de détection d'intrusions décrit ci-dessus est ici supposé destiné à être incorporé dans un système de sécurité chargé de protéger l'ensemble informatique que surveille ce dispositif.

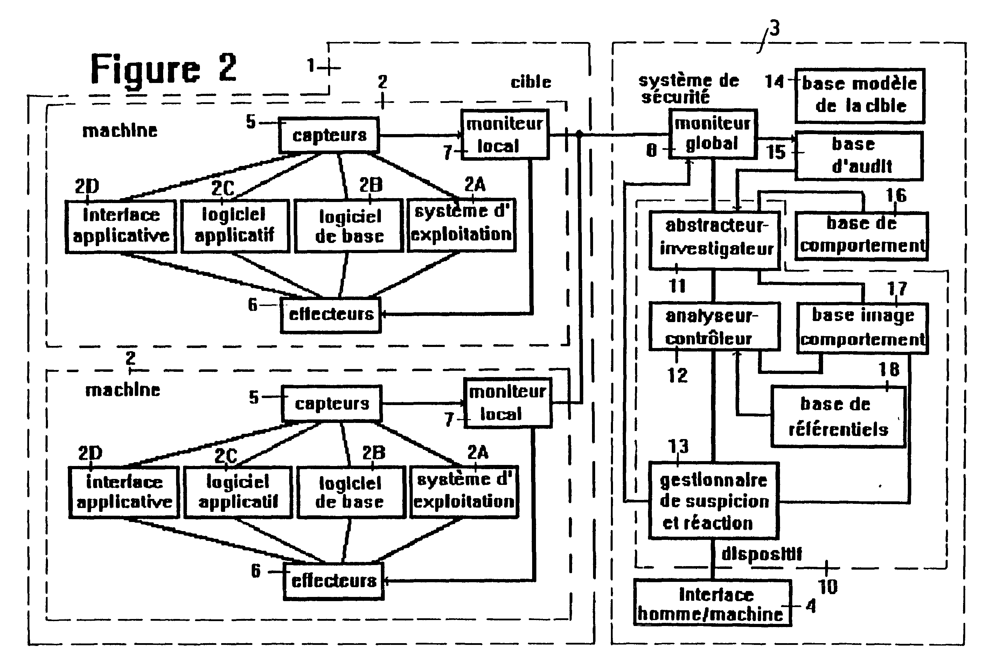

Un tel système de sécurité est schématisé en figure 2 il est montré associé à un ensemble informatique référencé 1, qui est ici supposé composé de plusieurs machines 2, organisées en réseau. Dans la réalisation envisagée, chaque machine 2 est supposée comporter un système d'exploitation 2A, un logiciel de base 2B, un logiciel applicatif 2C et une interface d'application 2D qui ne sont pas détaillés ici dans la mesure où leurs constitutions respectives sont sans rapport direct avec l'invention.

Comme déjà indiqué, le système de sécurité est associé à l'ensemble informatique 1 pour le protéger contre les actions informatiques anormales et plus particulièrement suspectes ou malveillantes, ainsi qu'indiqué plus haut.

Ce système de sécurité comporte au moins une machine 3, ou éventuellement un réseau de machines, qui est apte à communiquer avec les machines 2 de l'ensemble informatique 1 pour assurer la protection de ces dernières vis-à-vis des actions informatiques anormales des utilisateurs après avoir effectué et fait effectuer des opérations en vue de détecter ces actions anormales et leurs auteurs.

Le système de sécurité comporte aussi au moins une interface homme-machine 4 d'accès matériel et/ou logique à la ou aux machines 3 du système de sécurité en vue de permettre une supervision du système de sécurité et des interventions à au moins une personne ayant la responsabilité du fonctionnement de ce système, cette interface correspondant structurellement à l'interface homme-application 00 évoquée en relation avec la figure 1.

La détection des actions informatiques anormales est obtenue à partir d'informations fournies par des capteurs de perception 5 affectés à chaque machine 2 de l'ensemble informatique. Les capteurs 5 sont implantés dans le logiciel de la machine 2 à laquelle ils sont affectés, en particulier dans le système d'exploitation, ici référencé 2A de cette machine, dans son logiciel de base 2B, dans son logiciel applicatif 2C et dans son interface applicative 2D.

Certains capteurs sont destinés à signaler des actions et des événements intervenant au niveau des éléments de l'ensemble informatique cible auquel ils sont respectivement affectés.

D'autres capteurs permettent d'effectuer des mesures cycliques ou ponctuelles, par exemple en raison de leur programmation temporelle propre, ou sur demande.

Dans la réalisation envisagée, les informations recueillies par les différents capteurs d'une machine 2 sont traduites sous forme d'enregistrements d'audit estampillés selon l'horloge locale de la machine dont ils proviennent et elles sont rassemblées et mises en forme au niveau d'un moniteur local 7 affecté à cette machine 2. Ce moniteur local 7 est relié à un moniteur global 8 de machine 3 du système de sécurité, auquel il transmet les données d'audit qu'il a reçues. Le moniteur global 8 d'une machine 3 assure la collecte des données d'audit provenant des moniteurs locaux 7 desservis par cette machine 3 et en conséquence reliés à lui; il leur transmet les données de paramétrage et les demandes et/ou commandes qui sont fournies par la machine 3 le comportant et qui sont destinées aux capteurs 4 et aux effecteurs 5 que ces moniteurs locaux 7 desservent.

Les effecteurs 6 sont des processus ou autres agents permettant de mettre en oeuvre des mesures de contention pour contrecarrer les tentatives d'intrusion, ils sont prévus implantés dans le logiciel de la machine 2 à laquelle ils sont affectés. Dans l'exemple de réalisation proposé, cette implantation concerne le système d'exploitation 2A, le logiciel de base 2B, le logiciel applicatif 2C et l'interface applicative 2D de la machine 2 considérée.

Les effecteurs 6 sont par exemple des processus qui disposent de privilèges particuliers leur permettant d'affecter les droits ou l'existence d'autres processus, ce sont alternativement des agents qui correspondent par exemple à des parties de code dans des logiciels qui sont capables d'affecter l'utilisation faite de ces logiciels.

Les mesures de contention qu'ils mettent en oeuvre sont par exemple des déconnexions, des changements de droits ou de priorité, des destructions de processus.

Comme indiqué plus haut, les effecteurs 6 sont invoqués par le moniteur local 7 de la machine 2 à laquelle ils sont affectés pour appliquer les mesures spécifiques de contention ordonnées par la machine 3 du système de sécurité avec le moniteur global 8 de laquelle ce moniteur local 7 dialogue.

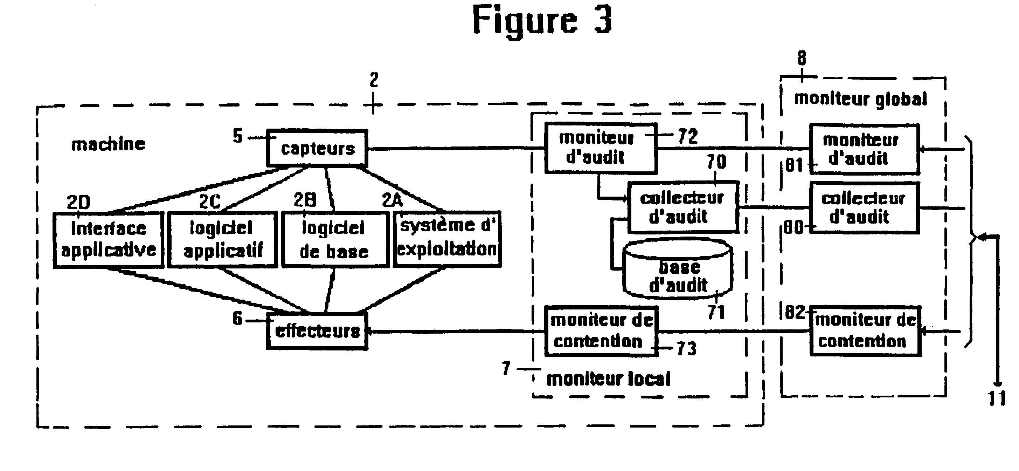

Un moniteur local 7 comporte par exemple - voir figure 3 -:
- un collecteur local d'audit 70 où sont temporairement reçues dans un tampon les données d'audit des capteurs 5 reliés à ce moniteur local 7.
- une base de données d'audit 71 pour le stockage des enregistrements d'audit reçus par le collecteur local 70 et notamment de ceux qui ne sont pas immédiatement transmis vers le moniteur global 8 avec lequel dialogue le moniteur local 7, par exemple en raison d'un filtrage imposé par l'intermédiaire de ce moniteur global 8,
- un moniteur d'audit 72 pour le paramétrage des capteurs 5 reliés au moniteur 7, selon les commandes émanant du moniteur global 8 défini ci-dessus,
- un moniteur de contention 73 pour la commande des effecteurs en fonction des mesures spécifiques de contention qui sont susceptibles d'être transmises par le moniteur global 8 défini ci-dessus et qui sont destinées à être appliquées au niveau de la machine 2 comportant le moniteur local 7.

La taille et le nombre d'enregistrements traités en un seul lot sont choisis tels qu'il soit possible de restaurer l'ordre correct des enregistrements dans le flot d'audit, l'estampille de ces enregistrements jusqu'alors basée sur l'horloge de la machine 2 étant traduite, au niveau du moniteur local, en une estampille relative à une horloge globale pour le système de sécurité. Une résolution locale des références est aussi effectuée à ce niveau, elle consiste à assurer un étiquetage correct des enregistrements par exemple par processus et par usager ainsi que des données d'investigation fournies suite à des requêtes spécifiques de la machine 3 du système de sécurité dont fait partie le moniteur global auquel les enregistrements sont transmis. Le filtrage évoqué plus haut permet de ne pas transmettre à ce moniteur global 8 les enregistrements ne satisfaisant pas les clauses logiques spécifiées par des contraintes de focalisation imposées par la machine 3 qui le comporte.

Dans la réalisation envisagée, le moniteur global 8 d'une machine 3 de système de sécurité assure au moyen d'un collecteur principal d'audit 80 - voir figure 3- la collecte des enregistrements d'audit provenant des machines 2 de l'ensemble informatique 1 qui lui sont rattachées et l'archivage de ces enregistrements, à des fins de consultation ultérieure, dans une base centrale de données d'audit 15 - voir figure 2 - de la machine 3 qui le comporte.

Cette collecte s'effectue par exemple par accumulation ordonnée dans un tampon des enregistrements provenant des collecteurs locaux d'audit 70, la taille du tampon et le nombre d'enregistrements traités en un même lot étant choisis pour permettre cette accumulation ordonnée.

Les enregistrements sont préférablement traduits vers une représentation orientée objet commune à tous les modules du système de sécurité, hormis ceux qui sont implantés dans l'ensemble informatique 1. Chaque moniteur global 8 comporte aussi un moniteur d'audit 81 lui permettant d'envoyer des instructions aux moniteurs locaux 7 qu'il dessert en vue de leur permettre de calculer les directives de paramétrage des capteurs, d'effectuer des investigations locales, et de réaliser un filtrage au niveau de leurs collecteurs locaux d'audit 70, respectifs, en fonction de contraintes de focalisation déterminées.

Ce moniteur global 8 comporte encore un moniteur de contention 82 assurant la répartition des mesures de contention aux moniteurs locaux 7 desservis par lui qui ont à les appliquer et avec lesquels il dialogue.

Le moniteur global 8 d'une machine 3 d'un système de sécurité agit sous le contrôle d'un dispositif de détection 10 auquel il communique les enregistrements traduits vers une représentation orientée objet qui ont été obtenus à partir des enregistrements d'audit fournis par les moniteurs locaux 7 des machines 2 de l'ensemble informatique 1 qu'il dessert. Il reçoit et transmet à ces moniteurs locaux 7 les instructions de surveillance destinées à faire assurer le paramétrage des capteurs et la mise en oeuvre d'investigations locales, les instructions de focalisation de filtrage local d'audit et celles relatives aux mesures de contention à faire appliquer par les effecteurs 6 desservis par ces mêmes moniteurs locaux 7.

Le dispositif de détection 10 est présenté inclus dans une seule machine 3 sur le schéma de la figure 2, bien qu'il puisse éventuellement être réparti entre plusieurs machines si besoin est. Il est structurellement réalisé à l'aide de composants construits par regroupement de fonctions constituant des ensembles logiques de traitement suivant leur position et leur niveau d'abstraction. Chaque composant correspond à une unité structurelle destinée à être implantée sous forme d'un processus ou d'un groupe de processus partageant des données communes, comme le sont par ailleurs les capteurs, les effecteurs et les moniteurs.

Dans la réalisation proposée figure 2, le dispositif de détection 10 comporte essentiellement un abstracteur-investigateur 11, un analyseur-contrôleur 12 et un gestionnaire de suspicion et de réaction 13 auxquels sont associées une pluralité de bases de données.

L'abstracteur-investigateur 11 correspond au système expert d'interprétation du comportement 01 évoqué plus haut, il construit une image du comportement de l'ensemble informatique 1 auquel il est associé, à partir des informations qui lui sont fournies.

Il regroupe plusieurs fonctions afin de fournir les informations nécessaires à l'analyse et au contrôle du comportement de l'ensemble informatique 1 à partir du flot d'audit transmis par le moniteur global 8 qui lui est associé.

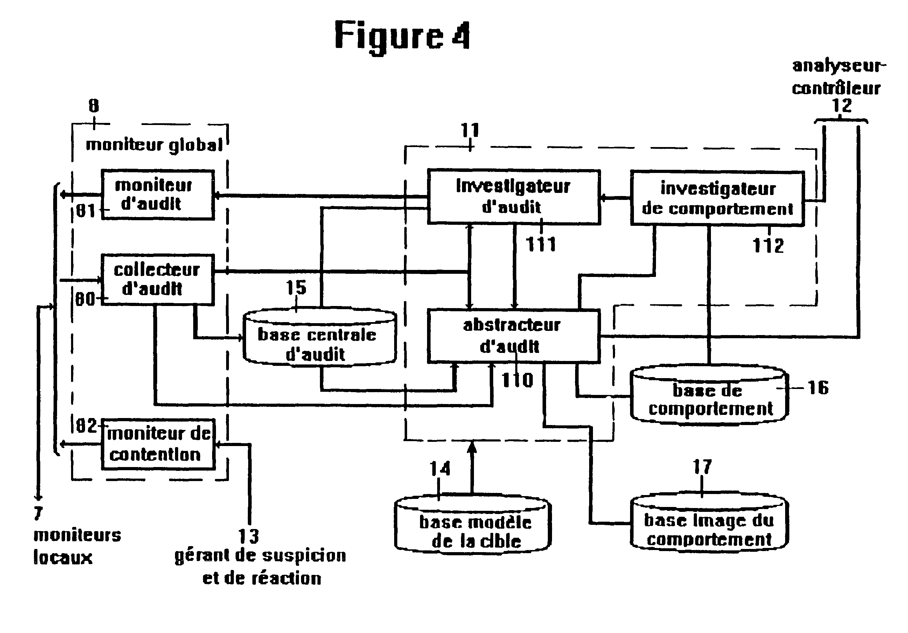

Il dispose à cet effet d'un abstracteur d'audit 110, d'un investigateur d'audit 111 et d'un investigateur de comportement 112, ainsi qu'on le voit sur la figure 4.

L'abstracteur d'audit 110 effectue une corrélation et une interprétation des enregistrements, ces derniers représentant des indices de comportement qui doivent être réunis suivant leur sémantique pour inférer des informations relevant du comportement des entités. L'interprétation de ces indices repose sur un modèle de l'ensemble informatique cible 1 et sur des connaissances propres à l'application mise en oeuvre par cet ensemble.

L'abstracteur 110 effectue aussi une contextualisation du comportement par interprétation des enregistrements d'audit en exploitant si nécessaire des informations de contexte, relatives au comportement caractérisé, qui sont soit éventuellement présentes dans une base de faits 17, dite image du comportement, soit recherchées dans une base de données 16, dite de comportement.

L'abstracteur 110 effectue encore une focalisation sur le comportement par filtrage des données avant envoi vers l'analyseur-contrôleur 12 associé et enregistrement dans la base de faits 17, afin d'éliminer les informations qui ne vérifient pas les clauses logiques spécifiées par des contraintes de focalisation relatives au comportement.

L'abstracteur 110 effectue enfin un archivage des informations de comportement interprétées dans la base de données de comportement 16 pour consultation ultérieure notamment par l'investigateur de comportement 112 et par lui-même.

Comme indiqué ci-dessus, l'abstracteur 110 est contrôlé par l'investigateur de comportement 112 associé à lui dans le même abstracteur-investigateur et il est activé soit par les enregistrements d'audit qu'il reçoit du moniteur global 8 associé, soit par des données d'investigation à traiter en provenance de l'investigateur d'audit 111 associé.

En relation avec les fonctions définies ci-dessus, il assure pratiquement:
- une interprétation des informations d'audit, transmises par le collecteur d'audit 80 du moniteur global 8 associé, en vue de créer l'image temporelle et spatiale de l'état et du comportement de la cible que constitue le système informatique 1, sous forme d'un réseau sémantique dans la base de faits 17;
- une interprétation de données d'investigation obtenues en réponse à des demandes de l'investigateur de comportement 112 associé;
- un filtrage des informations de comportement destinées à être transmises à l'analyseur-contrôleur 12 pour exploitation et à la base de faits image du comportement 17, pour stockage, ce filtrage s'effectuant en fonction de contraintes de focalisation communiquées par l'investigateur de comportement 112.

L'image de l'ensemble informatique est construite à partir des informations stockées déjà évoquées ainsi que de celles contenues dans une base de données 14 définissant un modèle de la cible que constitue l'ensemble informatique 1, de celles directement fournies par le collecteur d'audit 80 du moniteur global 8 qui dessert l'abstracteur 110, de celles stockées dans une base centrale de données d'audit 15 et de celles fournies par l'investigateur 111 associé à cet abstracteur 110. Les résultats obtenus par l'abstracteur 110 sont notamment stockés dans la base de données de comportement 16 ou dans la base de faits image du comportement 17, qui est exploitée en retour par l'abstracteur 110 pour ses constructions d'image.

L'investigateur d'audit 111 est commandé par l'investigateur de comportement 112 de l'abstracteur-investigateur 11 qui le comporte, il assure:
- la recherche et la commande d'acquisition de données particulières d'audit dans la base centrale de données d'audit 15, à la demande de l'investigateur de comportement 112 agissant pour l'analyseur-contrôleur 12 ou le gestionnaire de suspicion et de réaction 13 associés;
- la transmission des éléments de réponse fournis par le collecteur d'audit 80 du moniteur global 8 associé à l'investigateur de comportement 112, via l'abstracteur 110 auquel il est relié;
- la focalisation des collecteurs d'audit 70, 80 dépendant de lui.

L'investigateur de comportement 112 a pour rôle essentiel de rechercher les informations désirées par l'analyseur-contrôleur 12 et le gestionnaire de suspicion et de réaction 13 dans la base de données de comportement 16 et de commander leur acquisition par envoi de requêtes d'investigation de comportement à l'investigateur d'audit 111 auquel il est relié ou leur traitement par envoi de contraintes de focalisation à l'abstracteur 110 auquel il est également relié.

A cet effet, l'investigateur de comportement 112 assure une agrégation des requêtes d'investigation de comportement qu'il reçoit afin de voir si elles se complètent ou se recoupent et peuvent en conséquence être regroupées pour factoriser leurs traitements.

L'investigateur de comportement 112 effectue les recherches dans la base de données de comportement 16 en construisant les demandes de manière à obtenir les réponses aux requêtes d'investigation et à demander des recherches au niveau audit en cas de requête non satisfaite.

Lorsque des informations désirées ne sont pas stockées dans la base de données de comportement 16, l'investigateur de comportement 112 commande leur recherche à l'investigateur d'audit 111 auquel il est relié afin que ce dernier les trouve dans la base centrale de données d'audit 15. Les enregistrements d'audit retrouvés sont alors interprétés par l'abstracteur 110 pour construire les informations de comportement qui constituent les résultats de l'investigation. Ces résultats sont alors transmis à l'investigateur de comportement 112 pour envoi à leur destinataire.

L'investigateur de comportement 112 est également apte à calculer une nouvelle focalisation de l'abstracteur 110 et à faire calculer de nouvelles instructions de contrôle d'audit et de focalisation par l'investigateur d'audit 111, sur demande de l'analyseur-contrôleur 12 pour des informations à venir.

L'analyseur-contrôleur 12 du dispositif de détection selon l'invention est préférablement constitué par une pluralité de modules qui sont destinés à permettre une analyse et un contrôle du comportement de l'ensemble informatique 1 par raisonnement sur l'image du comportement qui a été construite afin de détecter les anomalies et les intrusions susceptibles d'affecter la sécurité de cet ensemble.

Les fonctionnalités d'analyse du comportement tirent parti du modèle construit de l'ensemble informatique 1 et des connaissances du domaine possédées pour inférer le comportement à d'autres niveaux et pour vérifier les correspondances entre des comportements de niveaux différents. Ces fonctionnalités se divisent en analyse cognitive du comportement des usagers et en analyse du comportement opératoire de l'ensemble informatique c'est-à-dire des actions, des états et des événements au sein de cet ensemble.

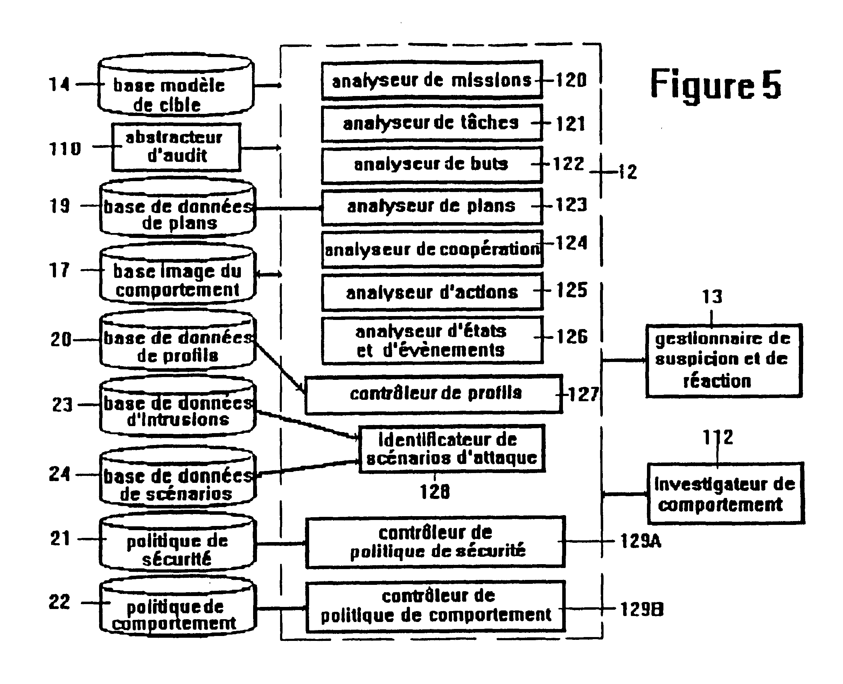

Dans la réalisation envisagée, l'analyse cognitive du comportement des usagers comprend ici l'analyse des missions de ces usagers, de leurs tâches, de leurs buts, de leurs plans et de leurs coopérations, ces analyses sont réalisées à partir de modules spécialisés correspondants référencés de 120 à 124 sur la figure 5 où figure l'analyseur-contrôleur 12.

L'analyseur de missions référencé 120 est destiné à vérifier que les tâches en cours pour un usager, alors considéré, dans l'ensemble informatique 1 correspondent aux missions spécifiées par les rôles propres à cet usager et à inférer de nouvelles missions à partir des tâches non prises en compte par les missions courantes.

Il exploite notamment à cet effet la base modèle de la cible 14, la base de faits image du comportement 17, et coopère avec l'investigateur de comportement 112 et avec certains des autres modules de l'analyseur-contrôleur 12, tels qu'un module analyseur de tâches 121 et un module analyseur de coopérations 124. Il informe plus particulièrement le gestionnaire de suspicion et de réaction 13.

Les tâches en cours qui sont reconnues par le module analyseur de tâches 121 sont confrontées aux spécifications de tâches recensées par les missions affectées à l'usager et par les rôles que cet usager remplit, une vérification par comparaison à un modèle (dite pattern matching) est par exemple mise en oeuvre à cet effet. Lorsque des tâches ne correspondant à aucune mission sont abstraites, elles sont signalées à l'analyseur de coopération et/ou à un module gestionnaire d'anomalies du gestionnaire de suspicion et de réaction 13.

L'analyseur de tâches 121 qui est de niveau d'abstraction inférieur au précédent est chargé de vérifier si les nouveaux buts inférés pour les usagers entrent ou non dans leurs tâches courantes et s'il n'y a pas de démarrages de nouvelles tâches lorsque les buts de ces tâches restent inexpliqués.

Il exploite à cet effet la base modèle de la cible 14, la base de faits image du comportement 17, et coopère avec l'analyseur de missions 120, avec un module analyseur de buts 122, ainsi qu'avec l'investigateur de comportement 112; il informe plus particulièrement le gestionnaire de suspicion et de réaction 13.

Une comparaison à un modèle, de même type que celle évoquée plus haut, permet de déterminer si les buts en cours pour un usager qui sont reconnus par l'analyseur de buts 122 correspondent aux spécifications de buts données par les tâches reconnues précédemment ou découlant des missions affectées à cet usager. Les buts ne correspondant à aucune tâche reconnue sont éventuellement abstraits, ou envoyés à l'analyseur de coopération 124 ou encore au gestionnaire de suspicion et de réaction 13, suivant le cas.

L'analyseur de buts 122 est destiné à tirer parti des actions, activités générales et plans reconnus pour un usager de manière à inférer ses buts, il assure aussi une évaluation de la satisfaction des buts courants par les plans mis en oeuvre.

Il exploite la base modèle de la cible 14, la base de faits image du comportement 17, et il coopère avec l'analyseur de tâches 121, un module analyseur de plans 123, l'analyseur de coopérations 124 et l'investigateur de comportement 112; il informe plus particulièrement le gestionnaire de suspicion et de réaction 13.

A cet effet, il compare les plans en cours qui ont été reconnus par l'analyseur de plans 123 à ceux qui sont recensés pour les buts en cours ou attendus d'un usager, alors considéré. Les plans ou actions ne correspondant à aucun but modélisé sont abstraits, envoyés à l'analyseur de coopération 124 ou encore signalés comme des anomalies au gestionnaire de suspicion et de réaction 13.

L'analyseur de plans 123 est destiné à reconnaître les plans exécutés par les usagers à partir de leurs actions présentes ou antérieures, d'après les plans en cours et les buts inférés. Il permet d'isoler les actions qui ne correspondent pas aux plans en cours et qui nécessitent éventuellement une analyse poussée.

Il exploite la base modèle de la cible 14, la base de faits image du comportement 17 et une base de données de plans 19.

Il coopère avec l'analyseur de buts 122, l'abstracteur 110, l'analyseur de coopérations 124 et l'investigateur de comportement 112. Il informe plus particulièrement le gestionnaire de suspicion et de réaction 13.

Dans la mesure où chaque action nouvelle entreprise par un usager peut poursuivre un plan en cours, démarrer un nouveau plan ou être une action isolée, elle est par exemple reliée par des graphes aux actions antérieures qui n'ont pas encore été oubliées pour l'opération de reconnaissance de plans; chaque graphe représente alors l'occurrence d'un plan dont l'action est susceptible de faire partie. Une action est ici considérée comme oubliée selon la terminologie employée ci-dessus, lorsque le plan auquel elle est rattachée est terminé et validé. Les actions inexpliquées sont susceptibles d'être envoyées à l'analyseur de coopération 124 ou signalées en tant qu'anomalies.

Les graphes représentant des candidats résultant de la reconnaissance de plans sont évalués, comme indiqué plus haut, afin que seuls soient retenus les plus plausibles, des heuristiques étant employés à des fins limitatives, tel le choix préférentiel des hypothèses correspondant à la satisfaction d'un but courant ou attendu. Ces évaluations sont susceptibles de conduire à une signalisation d'anomalie, si justifié.

L'analyseur de coopérations 124 est destiné à reconnaître l'occurrence de coopérations, spécifiées ou non dans le modèle de l'ensemble informatique 1, à partir d'actions, de plans ou de tâches, inexpliqués par l'analyse des plans, tâches et missions; la reconnaissance de coopérations non spécifiées et ne correspondant pas à la structure de l'organisation ou de l'application doit se traduire par une signalisation d'anomalie.

La base modèle de la cible 14 et la base de faits image du comportement 17 sont exploitées par les analyseurs de missions, de tâches et de plans 120, 121, 123; l'abstracteur 110 et l'investigateur de comportement 112 coopèrent avec l'analyseur de coopérations 124 qui informe plus particulièrement le gestionnaire de suspicion et de réaction 13.

Les coopérations potentielles entre usagers, qui sont spécifiées par la modélisation organisationnelle incluse dans le modèle de la cible, sont explorées pour détecter leurs occurrences. Le modèle de l'ensemble informatique 1 et des connaissances expertes relatives au domaine de l'application sont exploités pour la reconnaissance d'une éventuelle coopération d'un usager avec au moins un autre qui permettrait d'expliquer des actions, plans, buts, tâches autrement restés inexpliqués.

L'analyse du comportement opératoire de l'ensemble informatique 1, qui complète l'analyse cognitive évoquée ci-dessus, comprend ici une analyse des comportements tant actifs que passifs au sein de cet ensemble, les premiers se définissant en termes d'actions, les seconds en termes d'événements ou d'états. Cette analyse de comportement opératoire est mise en oeuvre à l'aide de modules spécialisés référencés 125 et 126 sur la figure 5.

L'analyse des actions qui est assurée par un module analyseur 125, est destinée à assurer la détection des modalités anormales d'exécution des opérations dans l'ensemble informatique 1. Elle s'effectue par un contrôle de conformité des effets des actions aux spécifications des opérations, par une vérification de la répercussion des actions aux couches sous-jacentes, toute action non satisfaisante étant signalée en tant qu'anomalie.

Le module analyseur d'actions 125 exploite notamment la base modèle de la cible 14 et la base de faits image du comportement 17; il coopère avec l'abstracteur 110 et l'investigateur de comportement 112 et il informe plus particulièrement le gestionnaire de suspicion et de réaction 13.

L'analyse des actions s'effectue par contrôle de protocole, les récepteurs et paramètres mis en oeuvre par les actions étant analysés par rapport aux modèles des opérations exécutées. Elle s'effectue aussi par contrôle d'effets, les états et événements faisant suite aux actions étant confrontés à la spécification des effets des opérations exécutées. Elle s'effectue encore par contrôle des répercussions, les éventuelles actions secondaires, à un même niveau ou dans une couche sous-jacente, qui constituent des répercussions d'actions primaires, étant évaluées par rapport aux spécifications d'effets des opérations exécutées.

L'analyse des états et événements qui est assurée par un module analyseur 126, est destinée à assurer la détection des états et événements anormaux dans l'ensemble informatique 1, étant considérés comme anormaux les états et événements qui ne correspondent pas à leurs causes ou à leurs spécifications et qui sont incohérents entre eux ou par rapport aux actions effectuées sur les entités.

L'analyseur d'états et événements 126 exploite à cet effet la base modèle de la cible 14 et la base de faits image du comportement 17. Il coopère avec l'abstracteur 110 et l'investigateur de comportement 112. Il informe plus particulièrement le gestionnaire de suspicion et de réaction 13.

Un contrôle de protocole est effectué par analyse des états ainsi que des paramètres et caractéristiques des événements par rapport au modèle des événements et de l'ensemble informatique 1. Un contrôle de cohérence est également effectué; il vérifie la correspondance entre, d'une part, les états et événements secondaires faisant suite aux états et événements analysés et, d'autre part, les actions et historiques des entités que constituent les agents, processus et objets de l'ensemble informatique 1.

Les fonctions de contrôle de comportement qu'incorpore l'analyseur-contrôleur 12 sont ici assurées par une pluralité de modules référencés 127, 128, 129A et 129B sur la figure 5.

Ces fonctions de contrôle sont destinées à vérifier la conformité du comportement de l'ensemble informatique 1 par rapport à ici trois référentiels correspondants qui sont respectivement classifiés historique, opérationnel et intrusionnel. Ils contiennent respectivement des profils, une expression des politiques de sécurité de comportement et un historique des scénarios d'attaque et des descriptions d'intrusions. Les fonctions de contrôle ont pour objet de vérifier que le comportement déterminé par constatation est conforme aux profils, qu'il respecte les politiques de sécurité et de comportement établies; elles doivent aussi détecter l'éventuelle mise en oeuvre de scénarios d'attaque.

La conformité du comportement déterminé par constatation par rapport aux profils archivés est vérifiée par un module 127, dit contrôleur de profils. Les profils rattachés aux entités dénotent leur comportement habituel et ceux définis pour des classes et groupes d'entités sont considérés comme des références de comportement standard ou typique. Un test de correspondance symbolique ou numérique et principalement statistique est réalisé pour contrôler le profil d'une entité; les mesures correspondant à ses caractéristiques sont effectuées sur le comportement et elles sont comparées aux valeurs enregistrées dans le profil archivé. Une conformité globale au profil archivé est évaluée par exemple d'après les correspondances des mesures individuelles, elle entraîne une signalisation d'anomalie, si la conformité est considérée comme mauvaise.

Le contrôleur de profils 127 exploite à cet effet la base modèle de la cible 14 et la base de faits image du comportement 17, une base de données de profils 20. Il coopère avec l'abstracteur 110 et l'investigateur de comportement 112. Il informe plus particulièrement le gestionnaire de suspicion et de réaction 13.

Une action est susceptible de donner lieu à une vérification de profil de l'acteur, usager ou agent, de l'action et des récepteurs, agents ou objets subissant l'action.

Un événement, un état ou une autre information de comportement est aussi susceptible de provoquer la vérification du profil des unités impliquées.

Pour la mesure des caractéristiques, les arguments auxquels s'appliquent ces caractéristiques sont valués et les méthodes de mesure leur sont appliquées, ces méthodes étant définies par les classes qui représentent les types de mesure. Des demandes à l'investigateur de comportement 112 permettent d'obtenir les éventuelles données manquantes.

Pour la vérification du respect des profils, les caractéristiques déterminées sont confrontées, par exemple par test statistique ou par correspondance symbolique, avec les valeurs correspondantes du profil et une conformité globale est estimée d'après les correspondances respectives des différentes caractéristiques. Les écarts sont considérés comme représentatifs d'un comportement inhabituel ou atypique correspondant à une anomalie.

Le contrôle des politiques est assuré par un module 129A pour la sécurité et un module 129B pour le comportement, ces modules vérifient les règles exprimées sur le comportement perçu et inféré de l'ensemble informatique 1 et des usagers, qui sont par exemple exprimées sous forme de contraintes par des clauses logiques ou comme des règles de production.

Le module de contrôle de la politique de la sécurité 129A vérifie le respect de la politique de sécurité tant en ce qui concerne le comportement actif que passif, il est ici activé par l'abstracteur 110 ou par les mises à jour de l'image du comportement. Il exploite la base modèle de la cible 14, la base de faits image du comportement 17 et une base de données de politique de sécurité 21, il coopère avec l'abstracteur 110 et avec l'investigateur de comportement 112. Il est apte à émettre des requêtes à destination de l'investigateur de comportement en cas de besoin et il informe plus particulièrement le gestionnaire de suspicion et de réaction 13.

Comme déjà indiqué, les comportements qui ne vérifient pas les règles de la politique de sécurité sont considérés comme des intrusions et signalés en conséquence au gestionnaire de suspicion et de réaction 13 et bien entendu au responsable de sécurité directement ou via ce gestionnaire.

Le module de contrôle de la politique de comportement 129B vérifie le respect de la politique de comportement, il est également activé par l'abstracteur 110 ou par les mises à jour de l'image du comportement. Il exploite la base modèle de la cible 14, la base de faits image du comportement 17 et une base de données de politique de comportement 22, il coopère avec l'abstracteur 110 et l'investigateur de comportement 112. Il est apte à émettre des requêtes à destination de l'investigateur de comportement en cas de besoin et il informe plus particulièrement le gestionnaire de suspicion et de réaction 13.

Le non-respect des règles de politique de comportement est considéré comme significatif d'anomalie ou d'intrusion suivant l'espèce et est signalé en conséquence au gestionnaire de suspicion et de réaction 13 et au responsable de sécurité via ce gestionnaire, si nécessaire.

La détection des éventuelles mises en oeuvre de scénarios d'attaque déjà connus est effectuée par l'intermédiaire d'un module identificateur 128. Elle repose sur une prise en compte des actions, états et événements impliqués dans une exécution. Un scénario d'attaque défini pour une intrusion donnée est susceptible d'être reconnu si le comportement des entités et de l'ensemble informatique correspond aux spécifications qu'il inclut. Une vérification de la réalisation effective des actions spécifiées par un scénario et des états et/ou événements auxquelles elles aboutissent est donc susceptible d'être faite. Une concordance partielle traduit déjà une anomalie qui se transforme en intrusion si le niveau de concordance atteint un seuil de certitude prédéterminé.

A cet effet, le module identificateur 128 exploite la base modèle de la cible 14, la base de faits image du comportement 17 et des bases de données d'intrusions 23 et de scénarios d'attaque 24, il coopère avec l'abstracteur 110, avec l'investigateur de comportement 112 et avec le gestionnaire de suspicion et de réaction 13 qu'il informe.

Il est guidé par les données par exemple à l'occurrence de nouvelles actions ou de nouveaux événements. Une nouvelle action d'un acteur, un nouvel état ou un nouvel événement est susceptible de faire partie d'un scénario d'attaque courant, de démarrer un nouveau scénario d'attaque ou encore d'être un élément de comportement isolé, il doit donc être confronté aux scénarios en cours d'examen et aux débuts des scénarios connus; chaque possibilité de scénario est ici supposée représentée par un graphe reliant les éléments de comportement concernés. Une évaluation des graphes susceptibles d'être reconnus comme impliqués dans un scénario est réalisée pour sélectionner les plus plausibles d'entre eux, des heuristiques sont par exemple exploités pour délimitation. Le degré de conformité vis-à-vis d'un scénario d'attaque connu permet de déterminer si l'action permet d'inférer une anomalie ou une intrusion. Les intrusions soupçonnées donnent éventuellement lieu à une planification et la base de données de scénarios d'attaque 24 est alors complétée par les nouveaux scénarios d'attaque qui ont été obtenus.

Le gestionnaire de suspicion et de réaction 13 du dispositif de détection selon l'invention est généralement destiné à servir d'intermédiaire entre l'analyseur-contrôleur 12 et d'une part l'ensemble informatique 1, d'autre part le responsable de sécurité, via l'interface homme-machine 4, pour ce dernier. Il est destiné à permettre l'interprétation des anomalies et intrusions qui sont signalées par l'analyseur-contrôleur 12, à évaluer le degré de suspicion des usagers et à aider à déclencher les mesures de contention nécessaires, sous la supervision du responsable de sécurité qu'il assiste.

Le gestionnaire de suspicion et de réaction 13 comporte ici une pluralité de modules référencés 130 à 135, un premier de ces modules, référencé 130 est un gestionnaire d'anomalies qui est chargé de traiter les anomalies signalées par l'analyseur-contrôleur 12. Il identifie parmi ces anomalies celles qui nécessitent de déclencher des alarmes ou de mettre en oeuvre des mesures de contention pour intrusion et il infère des intrusions ou des hypothèses d'intrusion.

Ce gestionnaire d'anomalies 130 coopère avec les différents analyseurs 120 à 127 et les contrôleurs 127 et 129B de l'analyseur-contrôleur 12, il exploite la base modèle de la cible 14 et la base de faits image du comportement 17. Il alimente des déclencheurs d'alarmes 131 et de contention 132, des gestionnaires d'intrusions 133 et de suspects 134 et la base de faits image du comportement 17.

Pour interpréter les anomalies la base de connaissances du gestionnaire d'anomalies exprime les heuristiques permettant la classification de certaines anomalies en tant que symptômes d'intrusion. Les hypothèses d'intrusion conduisent à rechercher des anomalies complémentaires dans l'image du comportement. Les intrusions et les hypothèses d'intrusion sont signalées au gestionnaire d'intrusions 133.

Pour aiguiller les autres anomalies, la base de connaissances exprime les critères de signal d'anomalies au gestionnaire de suspects 134, au déclencheur d'alarmes 131 et au déclencheur de contention 112.

Le gestionnaire d'intrusions 133 est chargé d'interpréter les intrusions et les hypothèses d'intrusion pour vérifier qu'il n'y a pas d'intrusion(s) plus globale(s) et/ou consécutives. Il est susceptible d'être activé par les analyseurs de missions 120, de tâches 121 et de buts 122, par l'identificateur de scénarios d'attaque 128, par les contrôleurs de politique 129A et 129B et par le gestionnaire d'anomalies 130. Il communique avec la base modèle de la cible 14, les déclencheurs d'alarmes 131 et de contention 132, le gestionnaire de suspects 134 et la base de faits image du comportement 17.

Les connaissances exprimées par la base de connaissances du gestionnaire d'intrusions sont exploitées pour relier les intrusions, pour en inférer de nouvelles et pour interpréter les intrusions en tant qu'éléments constitutifs éventuels d'intrusions plus globales. Les hypothèses d'intrusions de plus haut niveau amènent à rechercher des informations complémentaires dans l'image du comportement.

Les intrusions structurées de cette manière sont signalées au gestionnaire de suspects 134. La base de connaissances exprime aussi les critères de signalisation des intrusions et des hypothèses d'intrusion au déclencheur d'alarmes 131 et au déclencheur de contention 132, comme déjà indiqué.

Le gestionnaire de suspects 134 est chargé d'identifier les usagers réellement responsables des anomalies, des hypothèses d'intrusion et des intrusions; il évalue le degré de suspicion qui leur est alors affecté. Il assure aussi l'identification des usagers pour lesquels il est nécessaire de déclencher des alarmes ou de prévoir de mettre en oeuvre des mesures de contention.

Ce gestionnaire de suspects 134 est ici susceptible d'être activé par les gestionnaires d'anomalies 130 et d'intrusions 133, il communique avec la base modèle de la cible 14 et la base de faits image du comportement 17 et il alimente les déclencheurs d'alarmes 131 et de contention 132.

L'interprétation des anomalies et des intrusions dans le cadre de coopérations pouvant dénoter une coopération directe ou une collusion est assurée par la base de connaissances lors de la recherche des responsabilités.

Des degrés de suspicion sont induits par les anomalies, les hypothèses d'intrusion ou intrusions dont un usager ou agent informatique est responsable, ils sont combinés pour permettre la déduction d'un niveau de suspicion global pour l'usager considéré.

Les usagers suspects sont signalés aux déclencheurs d'alarmes 131 et de contention 132.

Le déclencheur d'alarmes 131 est chargé de signaler les anomalies, les hypothèses d'intrusion, les intrusions et les usagers suspects déterminés par les gestionnaires d'anomalies 130, d'intrusions 133 et de suspects 134 au responsable de sécurité. Il décide et élabore en conséquence, à partir des critères et connaissances stockées dans la base modèle de la cible 14, les alarmes qui sont transmises à l'interface homme-machine 4 pour présentation au responsable de sécurité, ces alarmes étant complétées par adjonction de leur contexte, lu dans la base de faits image du comportement 17.

Le déclencheur de contention 132 est chargé de proposer des mesures de contention au responsable de sécurité pour contrecarrer les anomalies, intrusions et usagers suspects signalés par les gestionnaires 130, 133 et 134 évoqués ci-dessus. La décision et l'élaboration de ces mesures de contention s'effectuent par application de critères stockés dans la base modèle de la cible 14 aux informations émanant des gestionnaires d'anomalies, d'intrusions et de suspects.

Les mesures proposées au responsable de sécurité via l'interface homme-machine 4 sont elles aussi complétées par adjonction de leur contexte obtenu de la base de faits image du comportement 17.

Le sélectionneur d'informations 135 est chargé de signaler les événements, actions et informations concernant le comportement de l'ensemble informatique 1 qui sont susceptibles de présenter un intérêt pour le responsable de sécurité.

Il est susceptible d'être activé par les modules de l'analyseur-contrôleur 12 et par les mises à jour intervenant au niveau de la base de faits image du comportement 17. Il communique en ce but avec la base modèle de la cible 14 et avec l'investigateur de comportement 112.

Les informations transmises par le sélectionneur 135 pour signaler des événements, des actions ou des informations relatives au comportement de l'ensemble informatique 1, sont obtenues par des tris effectués parmi les données de comportement inférées par les modules de l'analyseur-contrôleur 12 et obtenues dans la base de faits image du comportement 17, suivant les critères définis dans sa base de connaissances. L'investigateur de comportement 112 permet au responsable de sécurité de formuler des requêtes pour obtenir des informations complémentaires du sélectionneur d'informations 135, selon ses besoins.

## Revendications

1. Dispositif de détection d'intrusions et éventuellement d'usagers suspects, pour ensemble informatique (1), exploitant des flots de données de surveillance, relatives au comportement de l'ensemble informatique en fonctionnement et notamment aux actions des utilisateurs sur cet ensemble, qui sont établies au niveau de ce dernier, **caractérisé en ce qu'**il comporte:
- des premiers moyens (01) pour modéliser, par exploitation de règles et de connaissances préalablement acquises, la cible que constitue cet ensemble informatique (1) et ses usagers ainsi que leurs comportements respectifs par une représentation symbolique à l'aide d'un réseau sémantique (06);
- des seconds moyens (02) pour comparer le comportement modélisé du système et de ses utilisateurs par rapport au comportement normal modélisé prévu pour les mêmes conditions par des règles de comportement et de sécurité contenues dans une base de connaissances propre à ces seconds moyens et pour en inférer soit un objet anomalie, en cas de violation d'au moins une règle de comportement, soit un objet intrusion ou hypothèse d'intrusion, en cas de violation d'au moins une règle de sécurité;
- des troisièmes moyens (03) pour interpréter les anomalies constatées par exploitation de règles et de connaissances préalablement acquises afin d'émettre, renforcer ou confirmer des hypothèses d'intrusion en correspondance;
- des quatrièmes moyens (04) pour corréler et interpréter les hypothèses d'intrusion et les intrusions constatées par exploitation de règles et de connaissances préalablement acquises afin de relier les diverses hypothèses d'intrusion et/ou intrusions, d'en inférer de nouvelles.
- des moyens de communication (00) coopérant avec les divers autres moyens (01 à 04) évoqués ci-dessus pour assurer une signalisation des diverses informations que ces divers moyens produisent relativement au comportement, aux anomalies, aux hypothèses d'intrusion et aux intrusions.

2. Dispositif de détection d'intrusions, selon la revendication 1, **caractérisé en ce qu'**il comporte des cinquièmes moyens (05) pour identifier, à l'aide de connaissances préalablement acquises, les usagers réellement responsables des anomalies, hypothèses d'intrusion et intrusions établies par les seconds, troisièmes et/ou quatrièmes moyens, pour évaluer leur degré de suspicion et pour signaler ces usagers responsables, en coopération avec ces autres moyens et par l'intermédiaire des moyens de communication (00).

3. Dispositif de détection d'intrusions, selon au moins l'une des revendications 1 et 2, **caractérisé en ce que** les divers moyens (01 à 04 ou 05) qu'il met en oeuvre sont constitués par des systèmes experts qui partagent un même moteur d'inférences, fonctionnant en chaînage avant, ce moteur étant exploité en liaison avec autant de bases de connaissances qu'il y a de systèmes experts.

4. Dispositif de détection d'intrusion selon au moins l'une des revendications 1 à 3, **caractérisé en ce qu'**il comporte:
- un abstracteur-investigateur (11) doté de moyens (110 à 112) pour construire une image du comportement de la cible, constituée par le système informatique (1) et par ses usagers, et pour mener des investigations dans des bases de données (14 à 16) et de faits (17) ainsi qu'au niveau de l'ensemble informatique (1);
- un analyseur-contrôleur (12) doté de moyens (120 à 129)pour interpréter le comportement de l'ensemble informatique et de ses utilisateurs par rapport au modèle de la cible que traduisent les connaissances contenues dans des bases de données (14, 19 à 24) et de faits (17), afin de détecter les anomalies;
- un gestionnaire de suspicion et de réaction (13) doté de moyens (130 à 135) pour interpréter les anomalies et les intrusions détectées, pour identifier les usagers réellement responsables des anomalies et intrusions, pour affecter un degré de suspicion à au moins ces usagers de manière à déclencher des signalisations correspondantes destinées à être transmises via une interface homme-machine (4) et éventuellement des mesures de contention applicables à l'ensemble informatique (1) sous supervision humaine via ladite interface homme-machine.

5. Dispositif de détection d'intrusion selon la revendication 4, **caractérisé en ce qu'**il comporte un abstracteur-investigateur (11) associant un abstracteur d'audit (110) chargé de créer une image temporelle et spatiale de l'état et du comportement de la cible constituée par le système informatique et par ses usagers et d'interpréter à la demande des données résultant de demandes d'investigation, un investigateur d'audit (111) chargé de rechercher des données dans une base centrale de données d'audit (15) du dispositif et d'acquérir des données de surveillance sur demande au niveau de l'ensemble informatique, et un investigateur de comportement (112) chargé de rechercher des informations pour l'analyseur-contrôleur (12) et pour le gestionnaire de suspicion et de réaction (13) dans les bases de données (14 à 16) et de faits (17) du dispositif en liaison avec l'investigateur d'audit qu'il commande.

6. Dispositif de détection d'intrusion selon la revendication 4, **caractérisé en ce qu'**il comporte un analyseur-contrôleur (13) associant une pluralité de modules analyseurs de comportement de la cible (120 à 126) à une pluralité de modules de contrôle du comportement de cette cible (127 à 129).

7. Dispositif de détection d'intrusion selon la revendication 6, **caractérisé en ce que** les modules analyseurs se répartissent en modules (120 à 124) assurant une analyse cognitive du comportement des usagers et modules (125, 126) assurant une analyse du comportement opératoire de l'ensemble informatique (1).

8. Dispositif de détection d'intrusion selon la revendication 6, **caractérisé en ce que** les modules de contrôle de comportement associent un contrôleur de profils (127) chargé de contrôler la conformité du comportement déterminé par constatation avec un profil archivé, un identificateur d'attaques (128) chargé de rechercher la similarité du comportement déterminé avec des scénarios d'attaque connus et deux contrôleurs de politique l'un (129A) de sécurité apte à déterminer le non-respect des règles de sécurité stockées dans une base de données de politique de sécurité (21), afin de déclencher une signalisation d'intrusion à destination du gestionnaire de suspicion et de réaction (13) en cas de non-respect, et l'autre (129B) de comportement apte à déterminer le non-respect des règles de comportement stockées dans une base de données de politique de comportement (22) afin de déclencher, suivant l'espèce, une signalisation d'anomalie ou d'intrusion à destination du gestionnaire de suspicion et de réaction (13).

9. Dispositif de détection d'intrusion, selon la revendication 4, **caractérisé en ce que** le gestionnaire de suspicion et de réaction (13) comporte notamment des moyens (130, 131, 133) pour interpréter les anomalies et intrusions signalées, des moyens (134) pour déterminer les usagers suspects d'implication dans les anomalies, hypothèses d'intrusion et intrusions, ainsi qu'un niveau de suspicion qui est affecté à ces suspects en conséquence, des moyens (131, 132) pour respectivement déclencher des procédures d'alarme et de préparation de mesures de contention au profit d'un responsable de sécurité via l'interface homme-machine (4) du dispositif.

10. Système de sécurité, pour ensemble informatique (1), exploitant des flots de données de surveillance, relatives au comportement de l'ensemble en fonctionnement et notamment aux actions des utilisateurs sur cet ensemble, **caractérisé en ce qu'**il associe un dispositif de détection d'intrusions (10), selon au moins une des revendications 1 à 9, à un ensemble de capteurs (5) implantés dans le(s) logiciel(s) de l'ensemble informatique pour signaler les actions et événements intervenant à leur niveau, ainsi que les résultats de mesures, ce éventuellement sur demande, les dits capteurs étant reliés au dispositif de détection d'intrusions par des moniteurs (7, 8) notamment chargés de la mise en forme des données, recueillies par les capteurs, sous la forme de flots de données de surveillance, ces données correspondant chacune à une action, un événement ou une mesure.

11. Système de sécurité selon la revendication 10, **caractérisé en ce qu'**il comporte de plus un ensemble d'effecteurs (6), de type processus ou agents, implantés dans le(s) logiciel(s) de l'ensemble informatique (1) pour réaliser la mise en oeuvre de mesures de contention au niveau de l'ensemble informatique en vue de contrecarrer les tentatives d'intrusion visant cet ensemble informatique, ces effecteurs étant commandés à partir du gestionnaire de suspicion et de réaction (13) via des moniteurs (7, 8) associés à ce dispositif (10) et aux machines (2) de l'ensemble informatique.

## Claims

1. A facility for detecting intrusions and possibly suspect users, in a computer installation (1), making use of surveillance data streams relating to the behavior of the computer installation in operation and in particular to the actions of the users of said installation, which streams are generated in the installation, the facility being **characterized in that** it comprises:
first means (01) for modelling the target as constituted by said computer installation (1) and its users and also their respective behaviors by making use of previously acquired knowledge and rules and by means of a symbolic representation using a semantic network (06);
second means (02) for comparing the modelled behavior of the installation and its users with normal behavior expected for the same conditions as modelled by the behavior rules and security rules contained in a knowledge base belong to said second means, and for inferring therefrom either an anomaly object in the event of at least one of the behavior rules being violated, or an intrusion object or an intrusion hypothesis object in the event of at least one of the security rules being violated;
third means (03) for interpreting the anomalies observed by implementing the previously acquired rules and knowledge so as to generate, reinforce, or confirm corresponding intrusion hypotheses;
fourth means (04) for correlating and interpreting intrusion hypotheses and intrusions observed by implementing the previously acquired rules and knowledge in order to link together various intrusion hypotheses and/or intrusions, and to infer new intrusion hypotheses and/or intrusions therefrom; and
communication means (00) co-operating with the various other means (01 to 04) mentioned above for indicating the various data items that said various means produce relating to behavior, anomalies, intrusion hypotheses, and intrusions.

2. A facility for detecting intrusions according to claim 1, **characterized in that** it includes fifth means (05) for using the previously acquired knowledge to identify users who are actually responsible for anomalies, intrusion hypotheses, and intrusions as established by the second, third, and/or fourth means, to evaluate a corresponding degree of suspicion, and to indicate which users are responsible in co-operation with the other means and via the communication means (00).

3. A facility for detecting intrusions according to claim 1 or 2, **characterized in** the various means (01 to 04 or 05) implemented thereby are constituted by expert systems that share a common inference engine, operating with forward chaining, said engine being used in association with as many knowledge bases as there are expert systems.

4. A facility for detecting intrusions according to any one of claims 1 to 3, **characterized in that** it further comprises:
an abstractor-investigator (11) provided with means (110 to 112) for constructing an image of the behavior of the target, constituted by the computer installation (1) and by its users, and for carrying out investigations in the data bases (14 to 16) and the fact base (17) and also in the computer installation (1);
an analyzer-checker (12) provided with means (120 to 129) for interpreting the behavior of the computer installation and of its users with reference to the target model which represents the knowledge contained in the data and fact bases (14, 19 to 24, 17) in order to detect anomalies; and
a suspicion and reaction manager (13) provided with means (130 to 135) for interpreting the detected anomalies and intrusions, for identifying the users actually responsible for anomalies and intrusions, for attributing a degree of suspicion to at least one of said users so as to trigger corresponding messages for transmission via a human-machine interface (4), and optionally for triggering restraint measures applicable to the computer installation (1) under human supervision via said human-machine interface.

5. A facility for detecting intrusions according to claim 4, **characterized in that** it includes an abstractor-investigator (11) associating an audit abstractor (110) responsible for creating a time and space image of the state and of the behavior of the target constituted by the computer installation and its users, and for interpreting on demand the data that results from investigation requests, an audit investigator (111) responsible for searching data in a central audit data base (15) of the facility and for acquiring surveillance data on demand about the computer installation, and a behavior investigator (112) responsible for looking for data for the analyzer-checker (12) and for the suspicion and reaction manager (13) in the data and fact bases (14 to 16, 17) of the facility in association with the audit investigator which it controls.

6. A facility for detecting intrusions according to claim 4, **characterized in that** it includes an analyzer-checker (12) associating a plurality of modules for analyzing the behavior of the target (120 to 126) with a plurality of modules for checking the behavior of said target (127 to 129).

7. A facility for detecting intrusions according to claim 6, **characterized in that** the analyzer modules comprise modules (120 to 124) that perform cognitive analysis on the behavior of users, and modules (125, 126) that perform analysis of the operational behavior of the computer installation (1).

8. A facility for detecting intrusions according to claim 6, **characterized in that** the modules for checking behavior associate a profile checker (127) responsible for checking compliance of behavior as determined by observation with an archived profile, an attack identifier (128) responsible for looking for similarity between determined behavior and known attack scenarios, and two policy checkers, a security checker (129A) suitable for determining failure to comply with security rules stored in a security policy data base (21) in order to trigger indicating of an intrusion to the suspicion and reaction manager (13) in the event of non-compliance, and the other one being a behavior policy checker (129B) suitable for determining non-compliance with behavior rules stored in a behavior policy data base (22) in order to trigger, as appropriate, the indication of an anomaly or of an intrusion to the suspicion and reaction manager (13).

9. A facility for detecting intrusions, according to claim 4, **characterized in that** the suspicion and reaction manager (13) includes, in particular, means (130, 131, 133) for interpreting the indicated anomalies and intrusions, means (134) for determining users suspected of being implied in the anomalies, intrusion hypotheses, and intrusions, and also for determining a suspicion level which is consequently applied to said suspects, means (131, 132) respectively for triggering alarm procedures and for preparing restraint measures for the benefit of a person in charge of security via the human-machine interface (4) of the facility.

10. A security system for a computer installation (1) making use of streams of surveillance data relating to the behavior of the installation in operation, and in particular to the actions of the users of said installation, the security system being **characterized in that** it associates a facility (10) for detecting intrusions according to at least one of claims 1 to 9, with a set of sensors (5) included in the software of the computer installation for indicating actions and events that take place at the level of the software concerned, and also the results of measurements, optionally on demand, said sensors being connected to the facility for detecting intrusions via monitors (7, 8) responsible, in particular, for converting the data picked up by the sensors into the form of a stream of surveillance data, said data corresponding to respective actions, events, or measurements.

11. A security system according to claim 10, **characterized in that** it further includes a set of effectors (6) of the processor or agent type included in the software of the computer installation (1) for the purpose of implementing restraint measures in the computer installation in order to counter attempts at intrusion aimed at said computer installation, said effectors being controlled from the suspicion and reaction manager (13) via monitors (7, 8) associated with said facility (10) and with the machines (2) in the computer installation.

## Patentansprüche

1. Einrichtung zur Entdeckung des Eindringens und eventuell verdächtiger Benutzer für eine Datenverarbeitungseinheit (1), die sich auf das Verhalten der Datenverarbeitungseinheit im Betrieb und insbesondere auf Einwirkungen der Benutzer auf diese Einheit beziehende Überwachungsdatenströme ausnutzt, die in Höhe dieser letzteren aufgebaut werden, **dadurch gekennzeichnet, dass** sie umfasst:
- erste Mittel (01), um durch Ausnutzung von Regeln und vorher erlangten Kenntnissen durch eine symbolische Darstellung mit Hilfe eines semantischen Netzes (06) für das Ziel, das diese Datenverarbeitungseinheit (1) und ihre Benutzer sowie ihr jeweiliges Verhalten bilden, ein Modell zu bilden;
- zweite Mittel (02) zum Vergleichen des modellierten Verhaltens des Systems und seiner Benutzer in Bezug auf das modellierte normale Verhalten, das für die gleichen Bedingungen durch Verhaltensregeln und Sicherheitsregeln vorgesehen ist, die in einer für die zweiten Mittel geeigneten Wissensbasis enthalten sind, und um daraus entweder ein Anomalieobjekt im Falle einer Verletzung wenigstens einer Verhaltensregel oder ein Eindringensobjekt oder eine Hypothese eines Eindringens im Falle einer Verletzung wenigstens einer Sicherheitsregel zu folgern;
- dritte Mittel (03) zum Interpretieren der durch Ausnutzung von Regeln und vorher erlangten Kenntnissen festgestellten Anomalien, um Hypothesen eines Eindringens in Übereinstimmung auszusenden, zu verstärken oder zu bestätigen;
- vierte Mittel (04) zum Korrelieren und Interpretieren der Hypothesen eines Eindringens und des durch Ausnutzung von Regeln und vorher erlangten Kenntnissen festgestellten Eindringens, um die verschiedenen Hypothesen eines Eindringens und/oder das Eindringen zu verbinden, um daraus Nachrichten zu folgern;
- Kommunikationsmittel (00), die mit den verschiedenen oben genannten anderen Mitteln (01 bis 04) zusammenarbeiten, um eine Signalisierung der verschiedenen Informationen, die diese verschiedenen Mittel bezüglich des Verhaltens, der Anomalien, der Hypothesen eines Eindringens oder des Eindringens erzeugen, sicherzustellen.

2. Einrichtung zur Entdeckung des Eindringens nach Anspruch 1, **dadurch gekennzeichnet, dass** sie fünfte Mittel (05) zum Identifizieren der Benutzer, die wirklich für die Anomalien, Hypothesen eines Eindringens und das Eindringen, die von den zweiten, dritten und/oder vierten Mitteln aufgestellt wurden, verantwortlich sind, mit Hilfe von vorher erlangten Kenntnissen umfasst, um die Stärke ihres Verdachts zu bewerten und um diesen verantwortlichen Benutzern in Zusammenarbeit mit diesen anderen Mitteln und über die Kommunikationsmittel (00) ein Signal zu geben.

3. Einrichtung zur Entdeckung des Eindringens nach wenigstens einem der Ansprüche 1 und 2, **dadurch gekennzeichnet, dass** die verschiedenen Mittel (01 bis 04 oder 05), die sie einsetzt, aus Expertensystemen bestehen, die denselben Schlussfolgerungsmotor teilen, wobei dieser Motor in Verbindung mit so vielen Wissensbasen genutzt wird, wie es Expertensysteme gibt.

4. Einrichtung zur Entdeckung des Eindringens nach wenigstens einem der Ansprüche 1 bis 3, **dadurch gekennzeichnet, dass** sie umfasst:
- eine Abstraktionseinrichtung/Untersuchungseinrichtung (11), die mit Mitteln (110 bis 112) zum Aufbauen eines Bildes des Verhaltens des Ziels, das aus der Datenverarbeitungseinrichtung (1) und aus ihren Nutzern besteht, und zum Durchführen von Untersuchungen in Datenbasen (14 bis 16) und Ereignissen (17) sowie in Höhe der Datenverarbeitungseinheit (1) versehen ist;
- einen Analysator/Steuereinrichtung (12), der mit Mitteln (120 bis 129) zum Interpretieren des Verhaltens der Datenverarbeitungseinheit und ihrer Benutzer in Bezug auf das Modell des Ziels, das die in Datenbasen (14, 19 bis 24) und Ereignissen (17) enthaltenen Kenntnisse umsetzen, versehen ist, um die Anomalien zu entdecken;
- einen Verdachts- und Reaktionsverwalter (13), der mit Mitteln (130 bis 135) zum Interpretieren der Anomalien und des entdeckten Eindringens versehen ist, um die wirklich für die Anomalien und das Eindringen verantwortlichen Benutzer zu identifizieren, um wenigstens diesen Benutzern einen Stärke des Verdachts zuzuweisen, so dass entsprechende Signalisierungen, die über eine Schnittstelle Mensch-Maschine (4) übertragen werden sollen, und eventuell Fixierungsmaßnahmen (mesures de contention) ausgelöst werden, die auf die Datenverarbeitungseinheit (1) unter menschlicher Überwachung über die Schnittstelle Mensch-Maschine anwendbar sind.

5. Einrichtung zur Entdeckung des Eindringens nach Anspruch 4, **dadurch gekennzeichnet, dass** sie eine Abstraktionseinrichtung/Untersuchungseinrichtung (11) umfasst, die eine Audit-Abstraktionseinrichtung (110), die den Auftrag hat ein zeitliches und räumliches Bild des Zustands und des Verhaltens des Ziels, das aus der Datenverarbeitungseinheit und ihren Benutzer besteht, zu erzeugen und nach Bedarf Daten zu interpretieren, die sich aus Untersuchungsanforderungen ergeben, eine Audic-Untersuchungseinrichtung (111), die den Auftrag hat Daten in einer zentralen Audit-Datenbasis (15) der Einrichtung zu suchen und bei Bedarf in Höhe der Datenverarbeitungseinheit Übewachungsdaten zu sammeln, und eine Verhaltensuntersuchungseinrichtung (112) verbindet, die den Auftrag hat Informationen für den Analysator/Steuereinrichtung (12) und für den Verdachts- und Reaktionsverwalter (13) in den Datenbasen (14 bis 16) und Ereignissen (17) der Einrichtung in Verbindung mit der Audit-Untersuchungseinrichtung zu suchen, die sie steuert.

6. Einrichtung zur Entdeckung des Eindringens nach Anspruch 4, **dadurch gekennzeichnet, dass** sie einen Analysator/Steuereinrichtung (13) umfasst, der eine Vielzahl von Analysatormodulen (120 bis 126) für das Verhalten des Ziels mit einer Vielzahl von Steuerungsmodulen für das Verhalten dieses Ziels (127 bis 129) verbindet.

7. Einrichtung zur Entdeckung des Eindringens nach Anspruch 6, **dadurch gekennzeichnet, dass** die Analysatormodule sich in Module (120 bis 124), die eine kognitive Analyse des Verhaltes der Benutzer sicherstellen, und Module (125, 126) aufteilen, die eine Analyse des Betriebsverhaltens der Datenverarbeitungseinheit (1) sicherstellen.

8. Einrichtung zur Entdeckung des Eindringens nach Anspruch 6, **dadurch gekennzeichnet, dass** die Steuerungsmodule für das Verhalten eine Steuereinrichtung für Profile (127), die den Auftrag hat die durch Bestimmung mit einem archivierten Profil ermittelte Konformität des Verhaltens zu steuern, einen Angriffsidentifikator (128), der den Auftrag hat die mit bekannten Angriffsszenarien ermittelte Ähnlichkeit des Verhaltens zu suchen, und zwei Politiksteuereinrichtungen verbindet, die eine (129A) für die Sicherheit, die fähig ist die Nichtbeachtung der in einer Sicherheitspolitikdatenbasis (21) gespeicherten Sicherheitsregeln zu ermitteln, um im Falle einer Nichtbeachtung eine Signalisierung eines Eindringens mit Ziel Verdachts- und Reaktionsverwalter (13) auszulösen, und die andere (129B) für das Verhalten, die fähig ist die Nichtbeachtung der in einer Verhaltenspolitikdatenbasis (22) gespeicherten Verhaltensregeln zu ermitteln, um je nach Art eines Signalisierung einer Anomalie oder eines Eindringens mit Ziel Verdachts- und Reaktionsverwalter (13) auszulösen.

9. Einrichtung zur Entdeckung des Eindringens nach Anspruch 4, **dadurch gekennzeichnet, dass** der Verdachts- und Reaktionsverwalter (13) insbesondere Mittel (130, 131, 133) zum Interpretieren der signalisierten Anomalien und des Eindringens, Mittel (134) zum Ermitteln der verdächtigen Benutzer der Implikation in den Anomalien, Hypothesen des Eindringens und dem Eindringen sowie eines Verdachtsniveaus, das diesen Verdächtigen infolgedessen zugewiesen wird, Mittel (131, 132) zum entsprechenden Auslösen der Prozeduren für den Alarm und die Vorbereitung von Fixierungsmaßnahmen zum Nutzen eines Sicherheitsverantwortlichen über die Schnittstelle Mensch-Maschine (4) der Einrichtung.

10. Sicherheitssystem für eine Datenverarbeitungseinheit (1), das sich auf das Verhalten der in Betrieb befindlichen Einheit und insbesondere auf Einwirkungen der Nutzer auf diese Einheit beziehende Überwachungsdatenströme ausnutzt, **dadurch gekennzeichnet, dass** es eine Einrichtung (10) zur Entdeckung des Eindringens gemäß wenigstens einem der Ansprüche 1 bis 9 mit einer Gesamtheit (5) von Sensoren verbindet, die in die Software der Datenverarbeitungseinheit implementiert sind, um die Einwirkungen und Ereignisse, die in ihrer Höhe stattfinden, sowie die Ergebnisse von Maßnahmen, die eventuell bei Bedarf, zu melden, wobei die Sensoren mit der Einrichtung zur Entdeckung des Eindringens über Monitore (7, 8) verbunden sind, die die Ausgabeaufbereitung für von den Sensoren in Form von Überwachungsdatenströmen aufgenommene Daten zur Aufgabe haben, wobei diese Daten jeweils einer Einwirkung, einem Ereignis oder einer Maßnahme entsprechen.

11. Sicherheitssystem nach Anspruch 10, **dadurch gekennzeichnet, dass** es außerdem eine Gesamtheit (6) von Effektoren vom Prozess- oder Agententyp umfasst, die in die Software der Datenverarbeitunaseinheit (1) implantiert sind, um die Durchführung von Fixierungsmaßnahmen in Höhe der Datenverarbeitungseinheit im Hinblick darauf den auf diese Datenverarbeitungseinrichtung zielenden Eindringversuchen entgegenzuwirken, wobei diese Effektoren ausgehend vom Verdachts- und Reaktionsverwalter (13) über Monitore (7, 8) gesteuert werden, die mit dieser Einrichtung (10) und den Maschinen (2) der Datenverarbeitungseinheit verbunden sind.
